# EUROPÄISCHE PATENTSCHRIFT

(11) **EP 0 524 463 B1**
(45) Veröffentlichungstag und Bekanntmachung des Hinweises auf die Patenterteilung: **19.03.1997**
(21) Anmeldenummer: 92111217.3
(22) Anmeldetag: 02.07.1992
(51) Int. Cl.: B09B 3/00, A62D 3/00

(54) **Verfahren zur Dekontamination von verunreinigten Böden**
Method for the decontamination of polluted soil
Procédé de décontamination de terres polluées

(30) Priorität: 22.07.1991 DE 4124277
(43) Veröffentlichungstag der Anmeldung: 27.01.1993
(73) Patentinhaber: Linde Aktiengesellschaft, 65189 Wiesbaden (DE)
(72) Erfinder: Melzer, Reiner, Dipl.-Ing., W-7000 Stuttgart 30 (DE); Mikulla, Klaus D., Dipl.-Ing. (FH), W-8192 Geretsried (DE)
(74) Vertreter: Schaefer, Gerhard, Dr.

(56) Entgegenhaltungen:
- EP-A- 0 324 566
- WO-A-90/11475
- DE-A- 3 604 761
- DE-A- 3 706 684
- DE-A- 4 030 416
- US-A- 4 738 206
- US-A- 4 993 943

## Beschreibung

Die Erfindung betrifft ein Verfahren zur Dekontamination von verunreinigten Böden gemäß dem Oberbegriff des Anspruchs 1.

Es sind verschiedene Methoden zur Sanierung von mit Schadstoffen verunreinigten Böden, beispielsweise ölverseuchtes Erdreich, bekannt. Beispielsweise können die Schadstoffe mit Hilfe eines Waschmittels z.B. Wasser oder ein Lösungsmittel, aus dem Boden ausgewaschen werden. Das Waschmittel muß anschließend mittels aufwendiger Verfahren wie Sedimentation, Flotation, Extraktion oder Destillation aufbereitet werden. Große Probleme ergeben sich auch bei der Trennung des Waschmittels vom Boden. In der Regel bleibt immer ein großer Rest an kontaminiertem Waschmittel im Boden zurück.

Eine andere Methode zur Bodensanierung besteht in einer starken Erhitzung des Bodens durch Rauchgase und anschließender Verbrennung des Schadstoff-Rauchgas-Gemisches. Dabei können jedoch Dioxine gebildet werden, so daß eine aufwendige Rauchgasreinigung erforderlich ist.

In verschiedenen Druckschriften ist auch schon vorgeschlagen worden, den ausgehobenen Boden z. B. in einem Drehrohr auf eine geeignete Temperatur zu erhitzen und die Bodenverunreinigungen mittels eines durch den Boden hindurchgeleiteten Desorptionsmediums vom Boden abzutrennen. Als Desorptionsmedium kommt beispielsweise der aus dem Boden infolge der Erhitzung austretende Wasserdampf oder ein in den Boden eingeleitetes Inertgas in Betracht. Das mit den Bodenverunreinigungen beladene Desorptionsmedium wird kondensiert und das Kondensat wird abgezogen. In diesem Zusammenhang sei insbesondere auf die Druckschriften DE-A-3 604 761, US-A-4,738,206, US-A-4,993,943, EP-A-0 324 566 und DE-A-3 706 684 hingewiesen.

Der vorliegenden Erfindung liegt die Aufgabe zugrunde, ein Verfahren der eingangs genannten Art so auszugestalten, daß eine effektive und wirtschaftliche Dekontamination des Bodens erreicht wird, ohne daß neue Schadstoffe entstehen.

Diese Aufgabe wird erfindungsgemäß dadurch gelöst, daß das mit den Bodenverunreinigungen beladene Desorptionsmedium in einer Wäsche abgekühlt und anschließend in verschiedene Phasen aufgetrennt wird und die einzelnen Phasen getrennt weiterbehandelt werden, und daß die nach der Phasentrennung anfallende Gasphase weiter abgekühlt wird, wobei ausfallende Feststoffe in ein Lösungsmittel eingelöst werden.

Da mit Feststoffausfall zu rechnen ist, wird das mit den Bodenverunreinigungen beladene Desorptionsmedium gezielt in einer Wäsche bei beispielsweise 100°C abgekühlt. Nach der Wäsche erfolgt eine Phasentrennung, wobei mit bis zu fünf Phasen zu rechnen ist (nämlich: eine durch Zyklone oder Filter nicht zurückgehaltene Bodenfeststoffphase; eine Feststoff- und Flüssigphase, die durch die Abkühlung der desorbierten Schadstoffe entsteht; eine Flüssigphase, die aus dem aus dem Boden ausgetriebenen und als Desorptionsmittel benutzten Wasser entstanden ist; und eine im Gleichgewicht dazu stehende Dampfphase).

Um die gewünschte Phasentrennung zu erreichen, ist der pH-Wert in der Wasserphase entsprechend einzustellen. Die einzelnen Phasen werden anschließend getrennt voneinander einer gezielten Weiterbehandlung zugeführt.

Die nach der Phasentrennung anfallende Gasphase wird weiter z.B. in einem Luft- oder Wasserkühler abgekühlt. Um eine Verlegung der Wärmetauscherflächen des Kühlers zu verhindern, muß dabei ein weiterer Feststoffausfall unterbunden werden. Dies kann dadurch erreicht werden, daß ausfallender Feststoff in ein Lösungsmittel eingelöst wird. Typischerweise handelt es sich um organische Feststoffe, die in ein organisches Lösungsmittel eingelöst werden. Hierfür wird ein geeignetes Lösungsmittel in den Gasstrom eingedüst.

Das nach der Phasentrennung anfallende Wasser muß aufbereitet werden. Als erste Reinigungsstufe wird ein Filter vorgeschlagen, dessen Filtermaterial aus normaler Erde mit einem Kornspektrum von vorzugsweise 0,3-6mm besteht. Die adsorptiv mit Schadstoffen beladene Erde aus dieser Grobreinigungsstufe kann zur Wiederaufbereitung in das Drehrohr zurückgeführt werden. Vorzugsweise wird als Filtermaterial dekontaminierter Boden, der aus dem Drehrohr abgezogen und klassiert wird, eingesetzt.

Das Funktionsprinzip des vorliegenden Verfahrens beruht darauf, daß die Bodenschadstoffe bei erhöhten Temperaturen von bis zu 650°C unter Sauerstoffausschluß mittels eines Desorptionsmediums, insbesondere eines Strippgases, aus dem Boden ausgetrieben werden. Als Desorptionsmedium dient vorzugsweise der automatisch beim Verdampfen der Bodenfeuchte in folge des Erhitzens des Bodens entstehende Heißdampf. Diese Dampfmenge kann durch direkte Wasserzugabe zum heißen Boden erhöht werden. Eine andere Möglichkeit besteht darin, ein externes Desorptionsmedium, z.B. ein Inertgas durch den Boden hindurchzuleiten.

Dem Verfahren liegt die Erkenntnis zugrunde, daß die Reinigungsleistung durch das Strippen der Schadstoffe mit einem Strippgas nur begrenzt von der Durchsatzmenge des Strippgases abhängt. Dieser Gasstrom bewirkt lediglich eine Partialdruckerniedrigung bei den Schadstoffen. In erhöhtem Maß wird die Reinigungsleistung von der Temperatur bestimmt, wobei eine Verweilzeiterhöhung des Bodens unter erhöhten Temperaturen von z.B. bis zu einer Stunde eine Erniedrigung der notwendigen Desorptionstemperatur gegenüber kurzen Verweilzeiten zur Folge hat. Werden die drei Parameter Strippgasmenge, Temperatur und Verweilzeit optimal eingestellt, so kann der Schadstoff auch weit unterhalb seiner normalen Siedetemperatur vom Bodenkorn desorbiert werden. Die optimale Einstellung der drei Parameter hängt vom Schadstoffspektrum, der Bodenstruktur, dem Kohlenstoffgehalt, allen organischen Bodenbestandteilen und dem Alter der Altlast ab.

Es hat sich jedoch gezeigt, daß eine Begrenzung der Temperatur auf maximal 650°C und ein Ausschluß von Sauerstoff notwendig ist, um eine Bildung von toxischen Substanzen und Crackgasen zu verhindern. Andererseits reicht die Maximaltemperatur von 650°C aus, um eine weitgehende Desorption der Schadstoffe zu erzielen. Die jeweils optimale Temperatur, die aber niemals 650°C übersteigt, muß im Einzelfall in Abhängigkeit der speziellen Bodenverhältnisse ermittelt werden. In den meisten Anwendungsfällen beträgt die Behandlungstemperatur ca. 350 bis ca 550°C, wobei auch unterhalb dieser Temperaturen in bestimmten Fällen, so z.B. bei 200°C, Reinigungsziele erreicht wurden.

Aufgrund der relativ niedrigen Behandlungstemperaturen in Verbindung mit dem Sauerstoffausschluß findet keine chemische Zersetzung der Bodeninhaltsstoffe statt, wie dies bei den üblichen thermischen Verfahren der Fall ist. Insbesondere wird dadurch die Bildung von noch toxischeren Folgeprodukten der Bodenschadstoffe, wie z.B. Dioxinen und Furanen zuverlässig verhindert. Auch die indirekte Erhitzung des Bodens trägt dazu bei, die Problematik der Behandlung von Folgeprodukten zu vermeiden. Bei direkter Erhitzung, beispielsweise mittels Rauchgasen würden große Gasmengen dem die desorbierten Bodenschadstoffe enthaltenen Schadgasstrom beigemischt, wobei eine aufwendige Abgasreinigung erforderlich würde. Zudem würde bei direkter Erhitzung des Bodens durch Eintrag eines Heißgases große Mengen an Feinstaub ausgetragen, was ebenfalls eine aufwendige Aufbereitung des Abgases erforderlich machen würde.

Vorzugsweise wird der Boden bei überatmosphärischem Druck behandelt. Zweckmäßigerweise wird ein Wert von 2 bar abs. nicht überschritten. Durch den erhöhten Druck wird einerseits die Reinigungsleistung weiter erhöht, andererseits ergeben sich dadurch Vorteile bei der vorrichtungsseitigen Umsetzung des Verfahrens. Zweckmäßigerweise erfolgt nämlich die Behandlung des Bodens in einem Drehrohr und der bei der Desorption der Schadstoffe entstehende schadstoffbeladene Gasstrom wird aus dem Drehrohr abgezogen und anschließend einer Aufbereitung in mehreren nachgeschalteten Anlagenteilen unterzogen. Bei diesen Anlagenteilen handelt es sich unter anderem auch um Gebläse oder Verdichter, die beim Vorhandensein von Feststoffen in der Gasphase und Feststoffausfall aus dem Schadstoff bei erhöhten Temperaturen Probleme bereiten können. Beispielsweise kann es zu Verlegungen und in der Folge zu einem Druckverlust im Aufbereitungsteil kommen. Es wird daher vorgeschlagen, den Druckverlust im Aufbereitungsteil schon im Drehrohr durch Druckerhöhung auszugleichen.

Darüberhinaus wird durch den erhöhten Innendruck im Drehrohr ein Eindringen von Luftsauerstoff zuverlässig verhindert. Durch den Sauerstoffausschluß wird das Dioxinbildungspotential stark reduziert. Zudem können vorhandene Ein- und Austragsorgane sowie Dichtungen des Drehrohrs derart gestaltet werden, daß durch eine Inertgasspülung ein Sauerstoffeintritt in den warmen Teil der Anlage unterbunden wird. Darüberhinaus wird empfohlen, die Behandlung des Bodens mit dem Desorptionsmedium während einer Dauer von ca. 0,5 bis ca. 1 h aufrechtzuerhalten. Erfolgt die Desorption der Bodenschadstoffe in einem Drehrohr, so wird die Verweilzeit des Bodens im Desorptionsbereich des Drehrohrs dementsprechend eingestellt.

In einer besonders bevorzugten Ausführungsform der Erfindung ist vorgesehen, den Boden in einer einzigen Stufe vorzugsweise in einem Drehrohr, zu behandeln. In dieser Stufe erfolgen die Bodentrocknung und Schadstoffdesorption. Hierzu wird das Drehrohr zumindest im vorderen Teil, wo der Boden dem Drehrohr aufgegeben wird, von außen auf eine Rohrwandtemperatur von bis zu 650°C aufgeheizt. Dadurch wird die Bodenfeuchte zum Ausdampfen gebracht. Der entstehende heiße Wasserdampf wirkt als Desorptionsmedium, das die Bodenschadstoffe aufnimmt. Der dabei anfallende schadstoffbeladene Gasstrom wird vom Drehrohr abgezogen und einer weiteren Aufbereitung zugeführt. Bevor der desorbierte Boden aus dem Drehrohr abgeführt wird, kann er im Drehrohr, vorzugsweise durch Einleiten von flüssigem Wasser durch Verdampfen oder von Niederdruckdampf aus dem Gasaufbereitungsteil, abgekühlt werden.

Gemäß einer anderen Variante der Erfindung erfolgt die Behandlung des Bodens in mindestens zwei Stufen, wobei der Boden in der ersten Stufe erhitzt und getrocknet wird, während in der zweiten Stufe ein Desorptionsmedium durch den Boden hindurchgeführt wird. In einer nachgeschalteten dritten Stufe kann der Boden wieder abgekühlt werden.

Vorzugsweise werden hierfür drei Drehrohre in Reihe hintereinander geschaltet, wobei je ein Drehrohr für die Bodentrocknung, Schadstoffdesorption und die Bodenabkühlung vorgesehen ist. Um ein Eindringen der Schadstoffe in den bereits bei höheren Temperaturen gereinigten Boden bei der Abkühlung des Bodens, was den Sanierungserfolg gefährden könnte, zu verhindern, wird ein Inertgas, vorzugsweise Wasserdampf, im Gegenstrom zum abzukühlenden Boden geleitet und dem mit Schadstoffen beladenen Gasstrom aus der Desorptionsphase zugemischt.

In einer besonders bevorzugten Ausgestaltung des Verfahrens wird die den Drehrohren zuzuführende bzw. von den Drehrohren abzuführende Prozeßwärme indirekt angebracht. Das erste Drehrohr wird von außen auf eine Rohrwandtemperatur von bis zu 650°C erhitzt. Dabei dampft die Bodenfeuchte aus und wird als heißer Wasserdampf abgezogen. Der heiße Wasserdampf wird vorteilhafterweise als Desorptionsmedium im zweiten Drehrohr eingesetzt. Falls diese Wasserdampfmenge nicht ausreicht, ist es möglich von extern zusätzlich ein heißes Spülgas oder Wasser zur Schadstoffstrippung in das zweite Drehrohr einzuleiten. Aufgrund des vornehmlich hydrophilen Verhaltens des Bodens werden die adsorbierten organischen Schadstoffe von den Wassermolekülen verdrängt, was zu einer besseren Reinigung im Vergleich zu anderen Strippgasen führt.

In bestimmten Anwendungsfällen, bei denen es beispielsweise auf die strenge Einhaltung inerter Bedingungen ankommt, kann auch die Verwendung eines Inertgases als Desorptionsmedium empfehlenswert sein. Hierfür kommen beispielsweise Kohlendioxid oder Stickstoff in Betracht.

Wegen der vorgeschalteten Trocknung des Bodens in der ersten Stufe ist die anschließende Desorption in der zweiten Stufe besonders effektiv. Da der Wasseranteil aus dem Boden bereits in der ersten Stufe weitgehend abgetrennt wurde, können in der zweiten Stufe die im Boden verbliebenen Schadstoffe leichter desorbiert werden.

Wie bereits erwähnt, ist aufgrund der im Vergleich zu Verbrennungsverfahren vergleichsweise niedrigen Bodentemperatur beim vorliegenden Verfahren eine Dioxinbildung nicht zu befürchten. Trotz dieser relativ niedrigen Behandlungstemperaturen werden mit dem vorliegenden Verfahren bereits nach ca. 1 h Behandlungsdauer sehr gute Reinigungsergebnisse erreicht. Besonders die sonst sehr schwer abzutrennenden Schadstoffe PCB (polychlorierte Biphenyle) und PAK (polyzyklische aromatische Kohlenwasserstoffe) werden beim erfindungsgemäßen Verfahren unter die Nachweisgrenze gedrückt, während diese Stoffe beispielsweise bei der üblichen Wasserwäsche praktisch nicht entfernt werden können.

Im Gegensatz zu thermischen Verfahren erfordert das erfindungsgemäße Verfahren keine aufwendige Abluftaufbereitung. Aufgrund der Kondensation des Desorptionsmediums und der damit verbundenen Volumenreduzierung muß im Vergleich zu den Verbrennungsverfahren eine wesentlich geringere Menge an Trägermedium, d.h. Spülgas bzw. Rauchgas aufgearbeitet werden. Außerdem wird aufgrund der indirekten Erwärmung des Bodens eine Vergrößerung des Schadgasstroms in folge des Eintrags von Heizgas in den Boden vermieden, wodurch ebenfalls die Abluftaufbereitung vereinfacht wird.

Probleme der herkömmlichen Waschverfahren, wie schwierige Fest-Flüssigtrennung und Aufbereitung sehr großer Mengen an Waschwasser, treten beim erfindungsgemäßen Verfahren ebenfalls nicht auf. Außerdem wird der zu reinigende Boden nahezu vollständig (d.h. zu mehr als 99%) der Weiterverwendung zugeführt. Deponiekosten, wie sie z.B. bei den Bodenwaschverfahren anfallen, werden dadurch vermieden.

Ein weiterer Vorteil des vorliegenden Verfahrens ist darin zu sehen, daß der Boden nur mit umweltverträglichen Hilfsmitteln in Kontakt kommt, so daß eine chemische Veränderung der Schadstoffe oder des Bodens nicht zu befürchten ist. Außerdem liegen die Schadstoffe nach der Behandlung konzentriert ohne größere Restmengen am Boden vor und können deshalb leichter gezielt entsorgt werden. Darüberhinaus bleiben keine Rückstände von beispielsweise kontaminiertem Waschmittel im Boden.

Das erfindungsgemäße Verfahren eignet sich insbesondere zur Sanierung von mit Kohlenwasserstoffen verunreinigten Böden, wie beispielsweise ölverseuchtem Erdreich. Auch PCB und PAK -haltige Böden können mit dem vorliegenden Verfahren wirkungsvoll gereinigt werden. Darüberhinaus ist das Verfahren zur Sanierung von verseuchten Industriestandorten geeignet, die die verschiedensten Schadstoffe, wie Quecksilber, Chemieabfälle etc., aufweisen.

Im folgenden soll die Erfindung anhand eines in den Figuren schematisch dargestellten Ausführungsbeispieles näher erläutert werden.

In den Figuren sind Fließbilder einer Anlage zur Durchführung des Verfahrens dargestellt. Dabei betreffen die einzelnen Figuren verschiedene Anlagenteile derselben Anlage, die unmittelbar aneinander grenzen.

Im einzelnen zeigen
- Figur 1:: einen Anlagenteil zur Bodentrocknung und Bodenreinigung
- Figur 2:: einen Anlagenteil zur Abdampfkondensation mit Schadstoffabtrennung
- Figur 3:: einen Anlagenteil zur Wasserreinigung und Dampferzeugung

Im vorliegenden Ausführungsbeispiel soll mit einem Schadstoffgemisch aus Mineralölkohlenwasserstoffen, Polyaromatischen Kohlenwasserstoffen, polychlorierten Biphenylen, CKW, FCKW und BTX-Aromaten verseuchtes Erdreich dekontaminiert werden. Hierzu wird das Erdreich ausgehoben und einer thermischen Behandlung zugeführt.

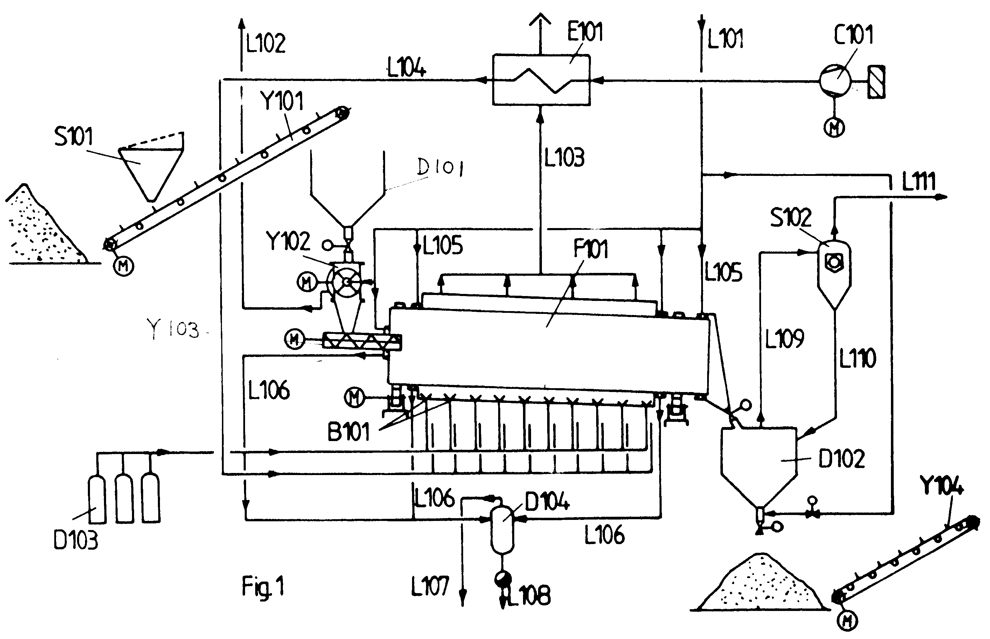

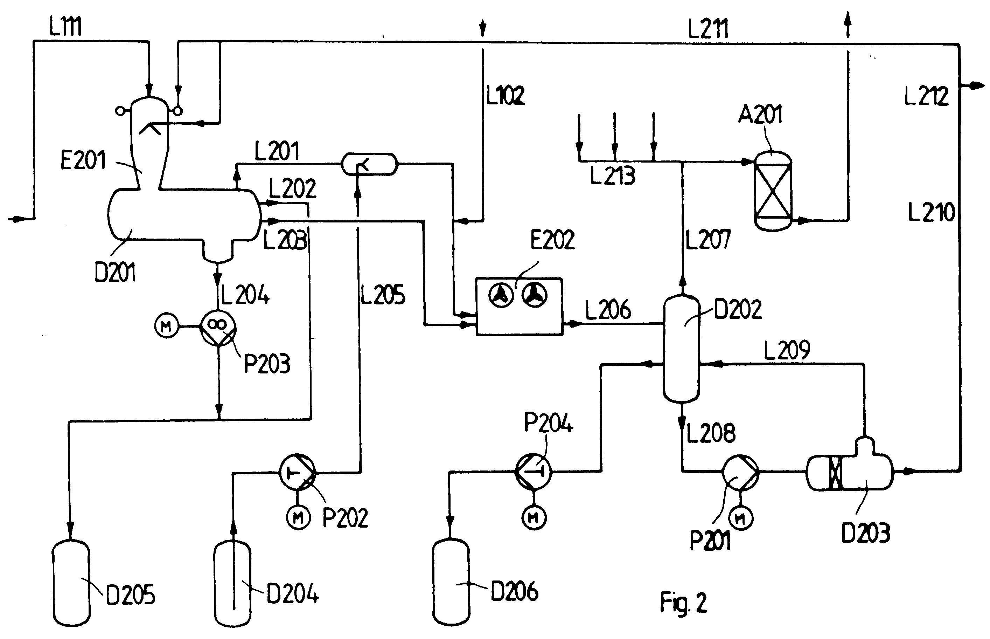

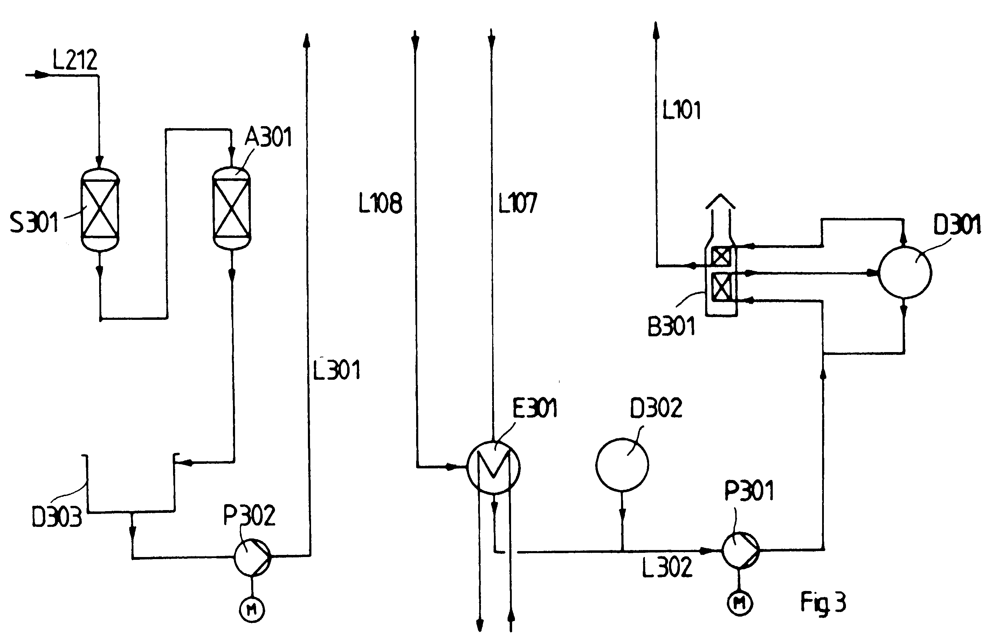

Wie in Figur 1 gezeigt, wird das ausgehobene Erdreich über ein Bodensieb S 101 einem Förderband Y 101 aufgegeben und in einen Vorlagebehälter D 101 gefördert. Hier kann durch N₂-Spülung der Restsauerstoffgehalt aus dem Porenvolumen des Bodens entfernt werden. Von dort gelangt das Erdreich über eine Zellradschleuse Y 102 in eine Förderschnecke Y 103. Die Zellradschleuse Y 102 wird mit einem Spülmedium, vorzugsweise Niederdruckdampf, der über Leitung L 101 aus dem in Figur 3 dargestellten Anlagenteil abgezogen wird, oder mit N₂ abgedichtet. Verbrauchter Niederdruckdampf wird über Leitung L 102 in den in Figur 2 dargestellten Anlagenteil geführt.

Das kontaminierte Erdreich wird mittels der Förderschnecke Y 103 in den Drehrohrofen F 101 gefördert. Der Drehrohrofen F 101 wird über Propanbrenner B 101, die von Propanflaschen D 103 gespeist werden, von außen auf Rohrwandtemperaturen von ca. 350 bis ca. 650°C aufgeheizt. Dabei verdampft die Bodenfeuchte des im Drehrohr F 101 befindlichen Erdreichs. Der Dampf wirkt als Desorptionsmedium und nimmt die Schadstoffe aus dem Boden unter Bildung eines Schadgasstroms auf. Das von den Propanbrennern B 101 erzeugte Rauchgas wird über Leitung 103 von der Rohrwand abgezogen und über einen Wärmetauscher E 101 geleitet. Auf diese Weise wird eine Verbrennungsluftvorwärmung gegen den Rauchgasstrom möglich. Die Verbrennungsluft wird von einem Luftgebläse C 101 angesaugt und über Leitung L 104 den Propanbrennern B 101 zugeführt.

Die Dichtungen von Drehrohr F 101 werden durch Zuführung von Niederdruckdampf aus dem in Figur 3 dargestellten Anlagenteil über Leitungen L 101 und L 105 auf einem erhöhten Druck von ca. 1,1 bar abs. gehalten. Bedingt durch den erhöhten Innendruck im Drehrohr F 101 wird ein Eindringen von Luftsauerstoff verhindert. Anfallendes Kondensat wird über Leitung L 106 abgezogen und einem Kondensatbehälter D 104 zugeführt. Der dabei anfallende Dampf und das Kondensat werden getrennt über Leitungen L 107 und L 108 dem in Figur 3 dargestellten Anlagenteil zugeführt.

Das thermisch behandelte Erdreich gelangt in einen Ablaufbehälter D 102. Dort wird der Schadgasstrom vom Boden abgetrennt und über Leitung L 109 einem Zyklonabscheider S 102 zugeführt. Im Zyklonabscheider S 102 werden vom Schadgasstrom mitgerissene Feststoffe abgetrennt und über Leitung L 110 wieder in den Ablaufbehälter D 102 zurückgeleitet.

Das dekontaminierte Erdreich wird aus dem Ablaufbehälter D 102 abgelassen und kann nach Abkühlung mittels eines Förderbandes Y 104 beispielsweise auf Lastkraftwagen verladen werden, um wieder an der Aushubstelle ausgebracht zu werden.

Der Schadgasstrom wird über Leitung L 111 zur Aufbereitung in den in Figur 2 dargestellten Anlagenteil gebracht.

In Figur 2 ist der Anlagenteil gezeigt, in dem der Schadgasstrom kondensiert wird und die Schadstoffe abgetrennt werden. Der Schadgasstrom gelangt über Leitung L 111 in einen Quenchkühler E 201, in dem der Schadgasstrom mittels einer Wäsche mit Wasser bei ca. 100°C abgekühlt wird. Nach der Wäsche erfolgt eine Phasentrennung in einem Abscheidebehälter D 201. Die einzelnen Phasen werden getrennt über Leitungen L 201, L 202, L 203 und L 204 abgezogen und jeweils gezielt aufbereitet. Über Leitung L 204 werden die schwere organische Phase und die Feststoffe abgeführt. In diesen Schadstoffstrom wird über Leitung L 202 die leichte organische Phase eingespeist. Das anfallende Wasser wird über Leitung L 203 abgeführt. Die nicht kondensierbaren Gase werden über Leitung L 201 abgezogen. In die Leitung L 204 ist eine Schadstoffpumpe P 203 eingeschaltet. Die Schadstoffe in den Leitungen L 202 und L 204 werden in einem Faß D 205 gesammelt.

Die restliche Gasphase wird über Leitung L 201 einem Luftkühler E 202 zur weiteren Abkühlung zugeführt. Da eine Abkühlung im Luftkühler E 202 nur dann möglich ist, wenn ein Feststoffausfall unterbunden wird, wird aus einem Lösungsmittelbehälter D 204 über eine Pumpe P 202 und über Leitung L 205 ein organisches Lösungsmittel in den Gasstrom in Leitung L 201 eingesprüht. Dies bewirkt, daß organische Feststoffe in das Lösungsmittel eingelöst werden, wodurch eine Verlegung von Wärmetauscherflächen im Luftkühler E 202 verhindert wird.

Außerdem wird über Leitung L 102 Niederdruckdampf aus dem in Figur 1 dargestellten Anlagenteil in den Gasstrom eingeführt.

Auch die in Leitung L 203 befindliche Wasserphase wird über den Luftkühler E 202 geleitet.

Der abgekühlte Schadstoffstrom wird über Leitung 206 einem Abscheidebehälter D 202 zugeführt. Der Prozeß wird druckausgleichend mit der Atmosphäre betrieben. Alle Schadstoffe und der Wasserdampf kondensieren bei Umgebungstemperatur. Zu Regelzwecken wird ein nicht kondensierbarer Inertgasstrom (z.B. N₂) über Leitung L 213 diskontinuierlich zugespeist. Der nachgeschaltete Aktivkohlefilter dient als Sicherheitsfilter gegen unzulässige Emissionen in Störfällen.

Die anfallende Wasserphase wird über Leitung 208 und eine Wasserkreislaufpumpe P 201 einem Coalescer D 203 zugeführt. Die anfallende flüssige Schadstoffphase wird über Leitung L 209 mittels der Pumpe P 204 abgepumpt und in einem Faß D 206 gesammelt.

Ein Teil der Wasserphase wird über Leitung L 210 und L 211 teilweise in den Quenchkühler E 201 zur Verwendung als Waschwasser zurückgeführt. Ein anderer Teil wird über Leitung L 210 und L 212 in den in Figur 3 dargestellten Anlagenteil überführt.

Figur 3 betrifft die Wasserreinigung und die Dampferzeugung. Der Wasserstrom in Leitung L 212 wird über ein Bodenfilter S 301 und ein Aktivkohlefilter A 301 geleitet. Das Bodenfilter S 301 enthält dekontaminiertes Erdreich aus dem Drehrohrofen F 101 als Filtermaterial. Ist das Filtermaterial mit Schadstoffen beladen, so wird es zur Regenerierung in den Drehrohrofen F 101 zurückgeführt. Das gereinigte Wasser wird in einen Abwasserbehälter D 303 eingeleitet. Von dort wird es mittels einer Abwasserpumpe P 302 abgepumpt und über Leitung L 301 abgeführt.

Das aus dem in Figur 1 dargestellten Anlagenteil über Leitung L 108 abgezogene Kondensat und der über Leitung L 107 abgeführte Niederdruckdampf wird einem Niederdruckdampfkondensator E 301 zugeführt, der mit Kühlwasser, das beispielsweise aus der Leitung L 301 entnommen werden kann, gekühlt wird. Das Kondensat wird über Leitung L 302 und eine Kondensatpumpe P 301 einem Dampferzeuger B 301 zugeführt. Behälter D 302 ist ein Vorlagebehälter für Wasser, das für die Dampferzeugung aufbereitet wurde. Er soll als Puffer dienen und Verluste oder Überschußanfall an aufbereitetem Wasser ausgleichen. Im Behälter D 301 wird der erzeugte Dampf vom umlaufenden Speisewasser getrennt. Der abgezogene Dampf wird einer Überhitzungsheizfläche im Dampferzeuger B 301 zugeführt. Der erzeugte Niederdruckdampf wird schließlich über Leitung L 101 in den in Figur 1 dargestellten Anlagenteil zurückgeführt.

## Patentansprüche

1. Verfahren zur Dekontamination von verunreinigtem Boden, wobei der Boden ausgehoben und anschließend durch indirekten Wärmeaustausch auf maximal 650 °C unter Sauerstoffausschluß erhitzt wird (F 101), wobei die Bodenverunreinigungen mittels eines Desorptionsmediums vom Boden abgetrennt werden, **dadurch gekennzeichnet**, daß das mit den Bodenverunreinigungen beladene Desorptionsmedium in einer Wäsche abgekühlt (E 201) und anschließend in verschiedene Phasen aufgetrennt wird (D 201) und die einzelnen Phasen getrennt weiterbehandelt werden (L 201 - L 204), und daß die nach der Phasentrennung anfallende Gasphase weiter abgekühlt wird (E 202), wobei ausfallende Feststoffe in ein Lösungsmittel eingelöst werden (L 205).

2. Verfahren nach Anspruch 1, dadurch gekennzeichnet, daß die nach der Phasentrennung anfallende Wasserphase filtriert wird (S 301, A 301).

3. Verfahren nach Anspruch 2, dadurch gekennzeichnet, daß der dekontaminierte Boden als Filtermaterial eingesetzt wird.

4. Verfahren nach Anspruch 2 oder 3, dadurch gekennzeichnet, daß das beladene Filtermaterial gemeinsam mit dem kontaminierten Boden thermisch behandelt wird (F 101).

5. Verfahren nach einem der Ansprüche 1 bis 4, dadurch gekennzeichnet, daß der Boden unter überatmosphärischem Druck erhitzt wird.

6. Verfahren nach einem der Ansprüche 1 bis 5, dadurch gekennzeichnet, daß während einer Dauer von ca. 0,5 bis ca. 1 h ein Desorptionsmedium durch den Boden hindurchgeführt wird.

7. Verfahren nach einem der Ansprüche 1 bis 5, dadurch gekennzeichnet, daß der Boden in einer einzigen Stufe (F 101) behandelt wird, in der der Boden getrocknet wird, die Bodenfeuchte durch Erhitzen zum Ausdampfen gebracht wird und die Bodenverunreinigungen vom Dampf desorbiert werden.

8. Verfahren nach einem der Ansprüche 1 bis 5, dadurch gekennzeichnet, daß der Boden in mindestens zwei Stufen behandelt wird, wobei der Boden in der ersten Stufe erhitzt und getrocknet wird und in der zweiten Stufe ein Desorptionsmedium durch den Boden hindurchgeführt wird.

9. Verfahren nach Anspruch 8, dadurch gekennzeichnet, daß als Desorptionsmedium der beim Verdampfen der Bodenfeuchte in der ersten Stufe anfallende Dampf eingesetzt wird.

10. Verfahren nach Anspruch 8 oder 9, dadurch gekennzeichnet, daß als Desorptionsmedium ein Inertgas eingesetzt wird.

11. Verfahren nach einem der Ansprüche 7 bis 9, dadurch gekennzeichnet, daß zusätzlich Wasser oder Wasserdampf in den Desorptionsbereich eingedüst wird.

## Claims

1. Method for the decontamination of polluted soil, the soil being excavated and then heated by indirect heat exchange to a maximum of 650°C with exclusion of oxygen (F 101), the soil pollutants being separated off from the soil by means of a desorption medium, characterized in that the desorption medium laden with the soil pollutants is cooled (E 201) in a scrubber and is then separated into various phases (D 201) and the individual phases are further treated separately (L 201 - L 204), and in that the gas phase produced after the phase separation is further cooled (E 202), solids precipitating out being dispersed (L 205) into a solvent.

2. Method according to Claim 1, characterized in that the water phase produced after the phase separation is filtered (S 301, A 301).

3. Method according to Claim 2, characterized in that the decontaminated soil is used as filter material.

4. Method according to Claim 2 or 3, characterized in that the laden filter material is thermally treated (F 101) together with the contaminated soil.

5. Method according to one of Claims 1 to 4, characterized in that the soil is heated at superatmospheric pressure.

6. Method according to one of Claims 1 to 5, characterized in that a desorption medium is passed through the soil for a period of approximately 0.5 to approximately 1 h.

7. Method according to one of Claims 1 to 5, characterized in that the soil is treated in a single stage (F 101) in which the soil is dried, the soil moisture is evaporated by heating and the soil contaminants are desorbed by steam.

8. Method according to one of Claims 1 to 5, characterized in that the soil is treated in at least two stages, the soil being heated and dried in the first stage and a desorption medium being passed through the soil in the second stage.

9. Method according to Claim 8, characterized in that, as desorption medium, use is made of the steam produced on evaporation of the soil moisture in the first stage.

10. Method according to Claim 8 or 9, characterized in that, as desorption medium, use is made of an inert gas.

11. Method according to one of Claims 7 to 9, characterized in that water or water vapour is additionally injected into the desorption region.

## Revendications

1. Procédé de décontamination de terres polluées, la terre étant excavée et ensuite chauffée (F 101) par échange thermique indirect à 650°C maximum sous exclusion de l'oxygène, les impuretés de terre étant séparées de la terre à l'aide d'un milieu de désorption, caractérisé en ce que l'on refroidit (E 201) le milieu de désorption chargé avec les impuretés de terre dans un lavage et qu'on le sépare ensuite en plusieurs phases (D 201) et que l'on soumet ensuite les phases individuelles à un traitement ultérieur de manière séparée (L201 - L204), et en ce que l'on refroidit encore (E 202) la phase gazeuse qui se forme après la séparation de phases, les substances solides qui se forment étant solubilisées dans un solvant (L205).

2. Procédé selon la revendication 1, caractérisé en ce que l'on filtre (S301, A301) la phase aqueuse qui se forme après la séparation de phases.

3. Procédé selon la revendication 2, caractérisé en ce que l'on utilise la terre décontaminée en tant que matériau de filtre.

4. Procédé selon la revendication 2 ou 3, caractérisé en ce que l'on traite de manière thermique (F 101) le matériau de filtre chargé conjointement à la terre contaminée.

5. Procédé selon l'une quelconque des revendications 1 à 4, caractérisé en ce que l'on chauffe la terre sous une pression dépassant la pression atmosphérique.

6. Procédé selon l'une quelconque des revendications 1 à 5, caractérisé en ce que, pendant une durée d'environ 0,5 heure à environ 1 heure, l'on fait passer un milieu de désorption à travers la terre.

7. Procédé selon l'une quelconque des revendications 1 à 5, caractérisé en ce que l'on traite la terre en une seule étape (F101), dans laquelle l'on sèche la terre, l'on contraint l'humidité de la terre a s'évaporer par chauffage et l'on désorbe de la vapeur les impuretés de la terre.

8. Procédé selon l'une quelconque des revendications 1 à 5, caractérisé en ce que l'on traite la terre en au moins deux étapes, la terre étant chauffée et séchée dans la première étape, et un milieu de désorption étant forcé de passer à travers la terre dans la deuxième étape.

9. Procédé selon la revendication 8, caractérisé en ce que l'on utilise, en tant que milieu de désorption, la vapeur qui se forme dans la première étape lors de l'évaporation de l'humidité de la terre.

10. Procédé selon la revendication 8 ou 9, caractérisé en ce que l'on utilise en tant que milieu de désorption un gaz inerte.

11. Procédé selon l'une quelconque des revendications 7 à 9, caractérisé en ce que l'on injecte en plus de l'eau ou de la vapeur d'eau dans le domaine de désorption.
